Europäisches Patentamt

(19) European Patent Office

Office européen des brevets

(11) Veröffentlichungsnummer: **0 063 748**
**B1**

(12) **EUROPÄISCHE PATENTSCHRIFT**

(45) Veröffentlichungstag der Patentschrift:
20.03.85

(51) Int. Cl.⁴: **H 04 M 1/76,** H 04 M 1/60

(21) Anmeldenummer: 82103152.3

(22) Anmeldetag: 15.04.82

(54) Schaltungsanordnung zur Erzeugung von Steuergrössen aus dem Schleifenstrom.

(30) Priorität: 24.04.81 DE 3116262

(43) Veröffentlichungstag der Anmeldung:
03.11.82 Patentblatt 82/44

(45) Bekanntmachung des Hinweises auf die Patenterteilung:
20.03.85 Patentblatt 85/12

(84) Benannte Vertragsstaaten:
AT BE CH DE FR GB IT LI NL SE

(56) Entgegenhaltungen:
FR - A - 2 382 131
GB - A - 1 525 057
US - A - 3 810 032
US - A - 4 071 713

REVIEW OF THE ELECTRICAL COMMUNICATION
LABORATORIES, Band 22, Nr. 3-4, Marz-Arpil 1974,
Seiten 236-249, Tokyo, JP. TERAI et al.: "An integrated
speech circuit for the small size telephone set"

(73) Patentinhaber: Licentia Patent-Verwaltungs-GmbH,
Theodor-Stern-Kai 1, D-6000 Frankfurt/Main 70 (DE)

(72) Erfinder: Eberhardt, Kurt, Dipl.-Ing., Eibenweg 26,
D-7900 Ulm (DE)
Erfinder: Höppner, Dietrich, Dipl.-Ing., Kreuzhalde 2,
D-7900 Ulm (DE)
Erfinder: Rall, Bernhard, Dipl.-Ing., Albecker Steige 67,
D-7900 Ulm (DE)

(74) Vertreter: Schickle, Gerhard, Dipl.-Ing. et al, Licentia
Patent-Verwaltungs-GmbH Theodor-Stern-Kai 1,
D-6000 Frankfurt/Main 70 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Schaltungsanordnung zur Erzeugung von Steuergrössen aus dem Schleifenstrom eines über eine Anschlussleitung gespeisten Endgerätes in Fernmeldeanlagen zur Steuerung mindestens der Verstärkung eines Hör- und/oder eines Sprechverstärkers.

In der Fernmeldetechnik werden Endgeräte, z.B. Fernsprechapparate, je nach Entfernung zu ihrer Vermittlungsstelle an verschieden lange Teilnehmeranschlussleitungen angeschlossen. Die Folge davon sind unterschiedliche Dämpfungen im Sprechweg oder unterschiedliche Eingangsimpedanzen der Anschlussleitung, die eine stärkere Bedämpfung der Rückhörsignale in der im Endgerät eingebauten Gabelschaltung erschweren.

Aus der Höhe des Schleifengleichstromes kann nun bei bekannter Speiseschaltung die Länge der Anschlussleitung ermittelt werden. Damit können dann Verstärkerschaltungen im Endgerät in ihrer Verstärkung gesteuert werden, um leitungslängenunabhängige Eigenschaften der Kombination Anschlussleitung/Endgerät zu erzielen.

Aus der DE-AS 22 54 148 ist es bekannt, die Sende- und Empfangsverstärkung von Verstärkerschaltungen im Endgerät linear mit wachsendem Überschuss des Schleifengleichstromes über einen vorgegebenen Minimalwert herabzusetzen. Oberhalb eines höheren Schleifengleichstromwertes bleiben beide Verstärkungen konstant. Der mit der Schaltungsanordnung erzielte Verstärkungsverlauf mit linearem Abfall über dem Schleifengleichstrom entspricht jedoch nicht den tatsächlichen Erfordernissen, nämlich eine dem Schleifengleichstrom nahezu umgekehrt proportional verlaufende Verstärkung.

Der Erfindung liegt daher die Aufgabe zugrunde, den Stand der Technik zu verbessern. Insbesondere soll durch eine Schaltungsanordnung der eingangs genannten Art eine Steuergrösse zur Verfügung gestellt werden, die dem Schleifenstrom nahezu umgekehrt proportional ist, so dass mit ihr ein tatsächlich erforderlicher Verstärkungsverlauf für unterschiedliche Anschlussleitungslängen erreicht wird.

Die Lösung der Aufgabe geht aus dem kennzeichnenden Teil des Anspruchs 1 hervor. Vorteilhafte Ausgestaltungen und Weiterbildungen der Erfindung sind in den Unteransprüchen angegeben. Durch die erfindungsgemässe Schaltungsanordnung ist es nunmehr möglich, Steuergrössen zu gewinnen, mit denen unabhängig von der Länge der Teilnehmeranschlussleitung die Signaldämpfungen kommender und gehender Nutzsignale (Sprachsignale) bis auf 0,5 dB genau ausgeglichen werden können.

Anspruch 2 gibt hierzu ein vorteilhaftes Ausführungsbeispiel zur Gewinnung der Steuergrössen für den Hörverstärker und den Sprechverstärker, das durch die Weiterbildungen nach den Ansprüchen 3 und 4 weiter verbessert wird.

Die Weiterbildung nach Anspruch 5 hat den grossen Vorteil, dass ohne zusätzlichen Aufwand auch eine Steuergrösse für eine steuerbare Impedanzschaltung gewonnen wird, welche eine von der Länge der Teilnehmeranschlussleitung unabhängige Rückhördämpfung bewirkt.

Die Erfindung wird nun anhand von Zeichnungen und einem Ausführungsbeispiel näher erläutert. Es zeigen im einzelnen:

FIG. 1 den erforderlichen Verlauf der Verstärkungen $V_1/V_{10}$ und $V_2/V_{20}$ für Sende- bzw. Empfangsrichtung und des Nachbildungswiderstandes $R/R_0$, jeweils bezogen auf den Sollwert für eine Anschlussleitungslänge von 0 km;

FIG. 2 die Prinzipschaltung zur Ableitung des Steuerstromes $I_{St}$;

FIG. 3 den Steuerstrom $I_{St}$ in Abhängigkeit vom Schleifenstrom $I_L$;

FIG. 4 ein vorteilhaftes Ausführungsbeispiel zur Gewinnung von in den Anschlüssen A, B und C abgreifbaren Steuergrössen;

FIG. 5 einen steuerbaren Sprechverstärker mit Steueranschluss B;

FIG. 6 einen steuerbaren Hörverstärker mit Steueranschluss C; und

FIG. 7 ein vereinfachtes Schaltbild eines elektronischen Fernsprechapparates mit steuerbaren Sprech- und Hörverstärkern und über Anschluss A steuerbarer Nachbildung.

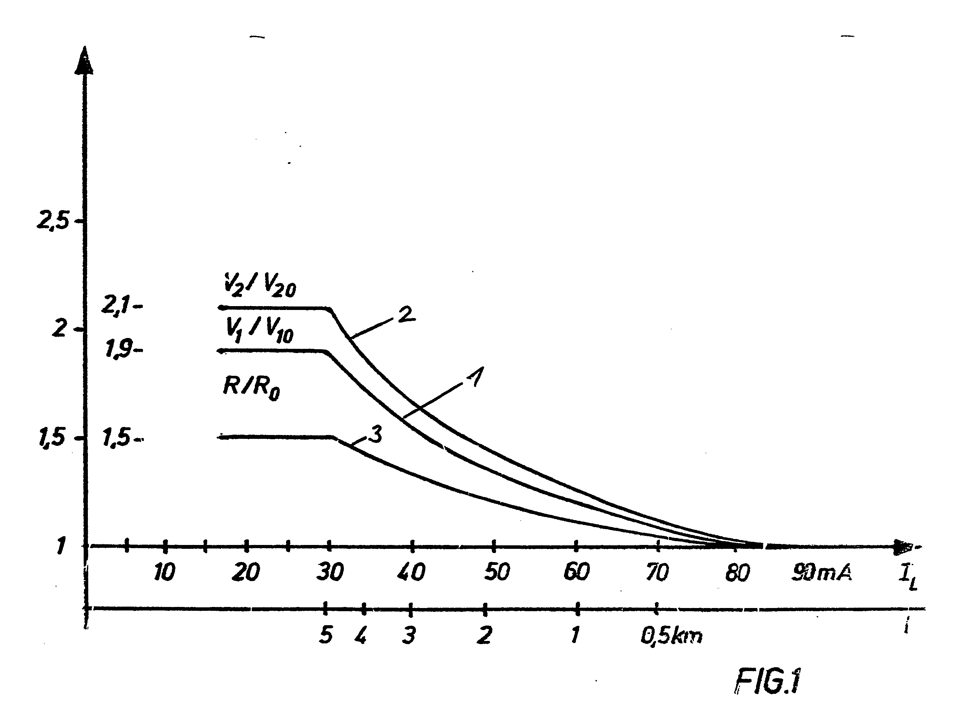

In FIG. 1 sind über der Anschlussleitungslänge 1 und der Grösse des Schleifenstromes $I_L$ der erforderliche relative Verlauf der Verstärkungen $V_1$ für die Senderichtung (Kurve 1) und $V_2$ für die Empfangsrichtung (Kurve 2) dargestellt. Diese Werte gelten für einen Innenwiderstand des Endgerätes von 900 Ohm, einem Innenwiderstand einer amtsseitigen 60 V-Spannungsquelle von 600 Ohm und einem Anschlussleitungswiderstand von 185 Ohm/km für einen konstanten Signalpegel auf der Amtsseite bei einer Frequenz von etwa 1300 Hz, also einer Frequenz, bei der Leitungsdämpfung und Bezugsdämpfung annähernd gleich sind.

Wie der FIG. 1 entnehmbar ist, muss bei einem Endgerät, das an einer l = 5 km langen Anschlussleitung angeschlossen ist und folglich 30 mA Schleifenstrom erhält, die relative Sendeverstärkung $V_1/V_{10}$ = 1,9 sein, d.h. an den Klemmen des Endgerätes muss die an die Anschlussleitung abgegebene Signalspannung 1,9mal grösser sein als diejenige, die das Endgerät für konstante Signalspannung auf der Amtsseite bei einer sehr kurzen Anschlussleitung (Grenzfall l = 0 km) haben müssen und dessen Schleifengleichstrom dann 100 mA betragen würde.

Andererseits ist bei einer 5 km langen Anschlussleitung die empfangene Signalspannung um den Faktor 2,1 niedriger als auf der Amtsseite und muss um diesen Faktor $V_2/V_{20}$ = 2,1 (Kurve 2) verstärkt werden, um den gleichen Signalpegel wie bei einer Leitungslänge l = 0 zu empfangen.

Ferner ist zur Vermeidung des Rückhörens im Endgerät eine Gabelschaltung mit einer Nachbildung vorgesehen. Diese Gabelschaltung erfüllt jedoch nur dann ihre Aufgabe in gewünschter Weise, wenn die Leitungsimpedanz gleich bleibt. Da dies bei unterschiedlichen Anschlussleitungslängen nicht der Fall ist, muss zum einwandfreien Betrieb auch die Nachbildungsimpedanz in Abhängigkeit von der Anschlussleitungslänge verändert werden. Kurve 3 in FIG.1 zeigt den erforderlichen Verlauf des Realteiles des relativen Nachbildungswiderstandes $R/R_0$ in Abhängigkeit von der Leitungslänge l bzw. vom Schleifenstrom $I_L$. Der Realteil des Nachbildungswiderstandes muss folglich bei einer Anschlussleitungslänge l = 5 km gegenüber seinem Wert für l = 0 km um den Faktor 1,5 erhöht werden, wenn eine Fehlanpassung von 20% vermieden werden soll.

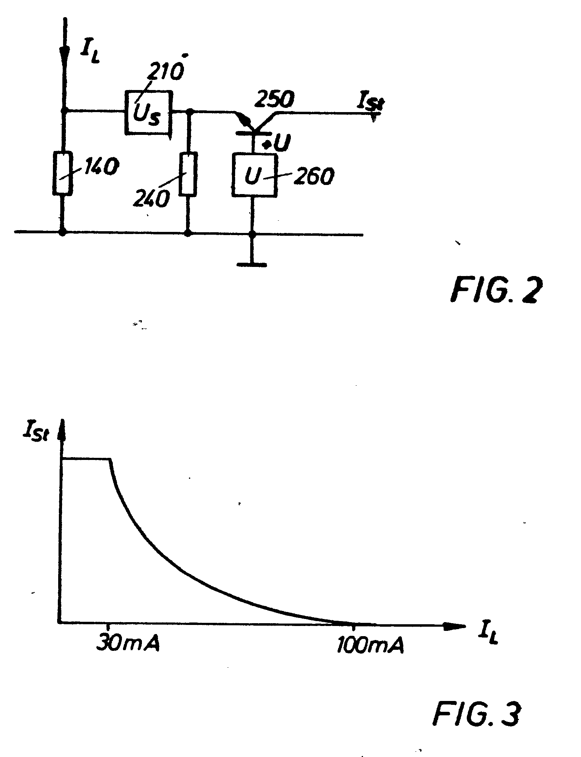

In FIG. 2 ist eine Prinzipschaltung einer Schaltungsanordnung gemäss der Erfindung angegeben, welche einen Steuerstrom $I_{St}$ erzeugt, der eine Steuerung der Verstärkungen $V_1$ und $V_2$ gemäss dem in FIG. 1 angegebenen Verlauf ermöglicht. Gemäss FIG. 2 durchfliesst der Schleifenstrom $I_L$ einen Widerstand 140 und erzeugt an ihm eine dem Schleifenstrom proportionale Spannung. Ein Transistor 250 in Basisschaltung, im Ausführungsbeispiel vom NPN-Typ, hat in seiner Emitterzuleitung einen Widerstand 240 und seine Basis liegt infolge einer Konstantspannungsquelle 260 gegenüber Bezugspotential auf der Spannung + U. Ein gegenüber dem Bezugspotential höheres Potential am Kollektor des Transistors 250 bewirkt zunächst einen konstanten Kollektorstrom, der gemäss der Erfindung als Steuerstrom $I_{St}$ verwendet wird.

Zwischen dem vom Schleifenstrom durchflossenen Widerstand 140 und dem Emitter des Transistors 250 ist ein Schaltungselement 210 mit niedriger Schwellenspannung geschaltet, das erst oberhalb eines vorgegebenen Schwellenwertes eine linear mit dem Schleifenstrom $I_L$ der Teilnehmeranschlussleitung verlaufende Spannung dem Emitter des Transistors 250 zuführt.

In FIG. 3 ist gezeigt, wie sich der Kollektorstrom des Transistors 250 mit dem Schleifenstrom $I_L$ ändert. Solange das Produkt $I_L \cdot R_{140}$ kleiner als die Schwellenspannung ist, bleibt der Kollektorstrom und damit der Steuerstrom $I_{St}$ konstant. Ein weiterer Spannungsanstieg am Widerstand 240 sperrt die Emitter-Basis-Strecke des Transistors 250, so dass der Steuerstrom exponentiell mit zunehmendem Schleifenstrom abnimmt.

Wie weiter unten erläutert wird, kann mit einem derartigen Steuerstromverlauf in vorteilhafter Weise die Gegenkopplung eines Verstärkers gesteuert werden, derart, dass ein grosser Steuerstrom die Gegenkopplung zwecks Verstärkungserhöhung herabsetzt. Auf diese Weise lassen sich Fertigungstoleranzen bezüglich Verstärkung und Verstärkungsverlauf sehr niedrig halten.

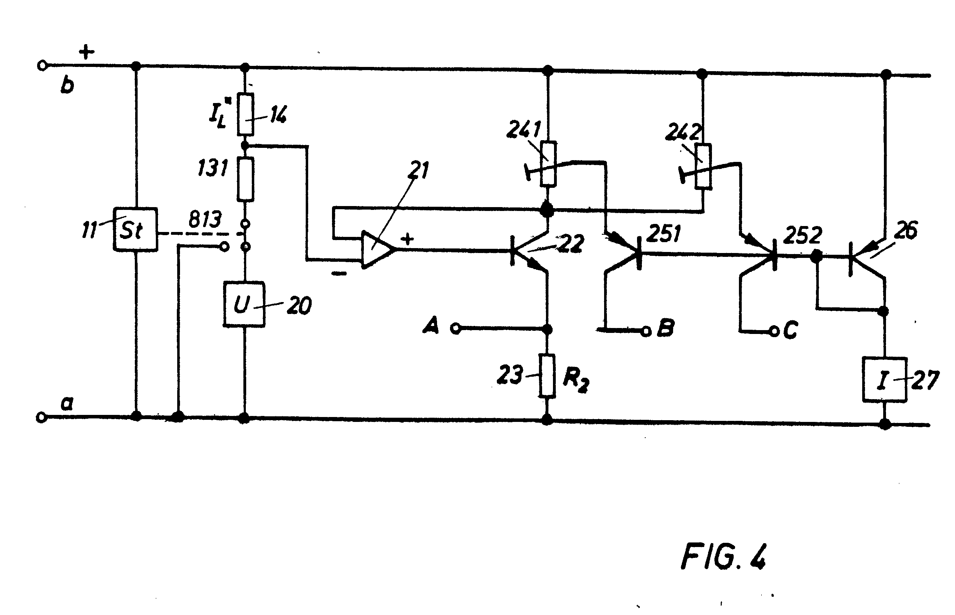

In FIG. 4 ist ein vorteilhaftes Ausführungsbeispiel gemäss der Erfindung dargestellt. Mit a und b sind die Klemmen eines Endgerätes, beispielsweise eines Fernsprechapparates, bezeichnet, dem über die Teilnehmeranschlussleitung der Schleifenstrom zugeführt wird. Lediglich die zum Verständnis der Erfindung wesentlichen elektronischen Elemente des Endgerätes sind in der Figur dargestellt. Der linke Schaltungsteil mit den Bauteilen 11 und 20 ist bekannt aus der DE-OS 30 29 895, veröffentlicht am 11.3.82. Er dient zur Erzeugung einer konstanten Versorgungsspannung $U_{20}$ im Endgerät aus dem Schleifenstrom $I_L$. Ein hoher Anteil des Schleifenstromes fliesst hierzu durch die Widerstände 14 und 131 und den elektronischen Umschalter 813. Die Steuerung 11 sorgt dafür, dass beim Absinken der Spannung an den Anschlussklemmen a und b unter der Spannung der Konstantspannungsquelle 20 infolge einer der Teilnehmeranschlussleitung überlagerten Wechselspannung der durch den Widerstand 14 fliessende Schleifenstrom nicht unterbrochen wird.

Der in Basisschaltung betriebene Transistor, dem der Steuerstrom entnommen wird, ist im Ausführungsbeispiel z.B. der Transistor 251. Seine konstante Basisspannung erhält er von der Basis-Emitter-Spannung eines als Diode geschalteten Transistors 26 mit Konstantstromquelle 27. Die Temperaturabhängigkeit der Basis-Emitter-Spannung dieses Transistors 26 hält den Emitterstrom und damit auch den Kollektorstrom des Transistors 251 bei Temperaturänderungen konstant.

Zwischen dem Verbindungspunkt der Widerstände 14 und 131 und dem Emitter des Transistors 251 ist ein Differenzverstärker 21 und ein Transistor 22 in Emitterschaltung geschaltet. Als Schwellenspannung wird u.a. die Offset-Spannung des Differenzverstärkers 21 ausgenutzt. Sie wurde auf etwa 50 mV eingestellt.

Der Emitter des Transistors 251 ist an einem Abgriff des Aussenwiderstandes 241 des Transistors 22 angeschlossen. Der Kollektor des Transistors 251 dient als Quelle für einen ersten Steuerstrom $I_{St}$, der dem Anschluss B entnommen werden kann.

Wie der FIG. 4 ferner entnommen werden kann, ist dem Aussenwiderstand 241 ein weiterer Aussenwiderstand 242 parallel geschaltet. Auch dieser Aussenwiderstand ist als Spannungsteiler ausgebildet und an seinem Abgriff ist der Emitter eines weiteren in Emitterschaltung betriebenen Transistors 252 angeschlossen, dessen Basisspannung in gleicher Weise wie die des Transistors 251 vom Transistor 26 versorgt wird. Am Kollektor des Transistors 252 ist ein weiterer Steuerstrom am Anschluss C entnehmbar. Im Ausführungsbeispiel ist der Anschluss B zum Anschluss eines steuerbaren Sprechverstärkers (Sendeverstärker) und der Anschluss C zum Anschluss eines steuerbaren Hörverstärkers (Empfangsverstärker) vorgesehen.

Um die Steuerungen unabhängig durchzuführen, können zwei parallel geschaltete Transistoren 22 mit getrenntem Arbeitswiderstand verwendet werden. Es genügt jedoch, wie im Ausführungsbeispiel gezeigt, für beide Transistoren 251 und 252 einen einzigen Transistor 22 vorzusehen, und die Emitter der Transistoren 251 und 252 jeweils an einem Abgriff zweier parallel geschalteter und als Arbeitswiderstände des Transistors 22 dienende Spannungsteiler anzuschliessen.

Der zweite Eingang des Differenzverstärkers 21 ist am Kollektor des Transistors 22 angeschlossen. Bei stromlosem Transistor 22 fliesst durch die Transistoren 251 und 252 der maximal mögliche Steuerstrom und bewirkt durch die Spannungsabfälle an den Widerständen 241 und 242 ein Anfangspotential am Kollektor des Transistors 22, das auch am zweiten Eingang des Differenzverstärkers 21 anliegt. Erst wenn dieses einschliesslich der Offset-Spannung des Differenzverstärkers 21 von der Spannung am Widerstand 14 überschritten wird, wird der Differenzverstärker ausgesteuert. Es entsteht auf diese Weise der in FIG. 3 gezeigte konstante Steuerstrom für Schleifenströme $I_L$ zwischen Null und einem vorgegebenen Minimalwert, beispielsweise 30 mA. Von nun ab ändert sich das Potential am Kollektor des Transistors 22 um gleiche Spannungsbeträge wie am Widerstand 14. Eine lineare Potentialänderung am Widerstand 14 bewirkt somit eine lineare Emitterspannungsänderung der Transistoren 251 und 252, so dass durch deren exponentiell verlaufende Emitter-Basis-Kennlinie die den Anschlüssen B und C entnehmbaren Steuerströme exponentiell abnehmen.

Die in FIG. 4 dargestellte Schaltung hat den weiteren Vorteil, dass mit ihr eine weitere Steuergrösse für die Steuerung der Nachbildung eines Endgerätes abgeleitet werden kann. Hierzu ist im Emitter des Transistors 22 ein Emitterwiderstand 23 geschaltet, an dem die erforderliche Steuergrösse abgreifbar ist. Diese Steuergrösse ist eine sich linear mit dem Schleifenstrom ändernde Spannung und ist am Anschluss A abnehmbar.

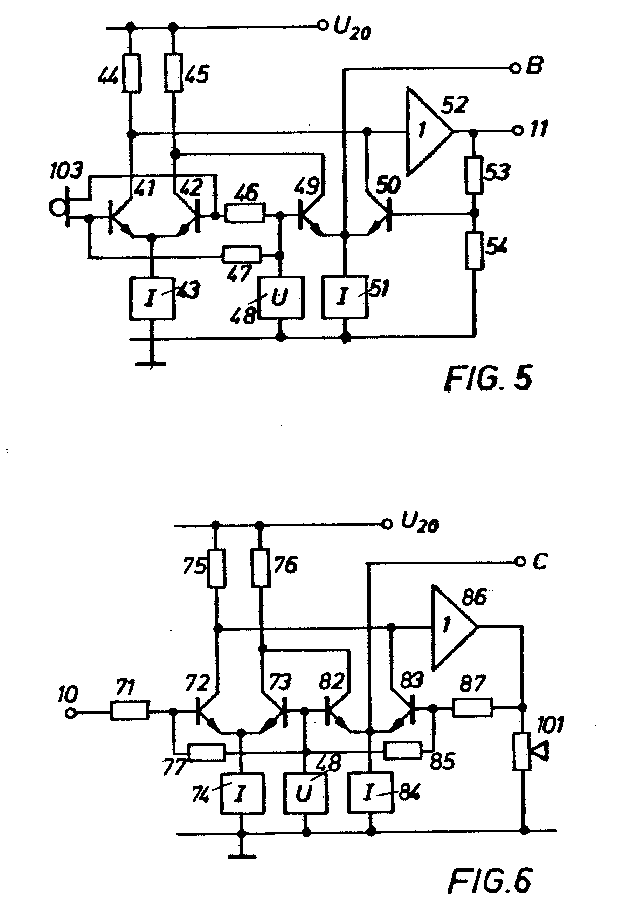

Die Figuren 5 und 6 zeigen die Verwendung der den Anschlüssen B und C (FIG. 4) entnehmbaren Steuerströme. In FIG. 5 ist ein steuerbarer Sprechverstärker mit Mikrofon 103, einem ersten und zweiten Differenzverstärker sowie einem Endverstärker 52 mit Ausgang 11 dargestellt. Der erste Differenzverstärker umfasst die Transistoren 41 und 42 mit ihren Arbeitswiderständen 44 und 45, ihrer gemeinsamen Emitterstromquelle 43 und ihrer Basisvorspannungsquelle 48, deren Spannung den Transistoren über die Widerstände 46 und 47 zugeführt wird. Das Mikrofon 103 ist an der jeweiligen Basis der Transistoren 41 und 42 angeschlossen. Als Ausgang des ersten Differenzverstärkers dient vorwiegend der Kollektor des Transistors 41.

Der zweite Differenzverstärker umfasst die Transistoren 49 und 50 mit gemeinsamer Emitterstromquelle 51. Ihre Kollektoren sind mit den Kollektoren der Transistoren 41 und 42 des ersten Differenzverstärkers verbunden, d.h., der Kollektor des Transistors 49 ist mit dem Kollektor des Transistors 42 und der Kollektor des Transistors 50 mit dem des Transistors 41 verbunden. Die Basis des Transistors 49 liegt ebenfalls an der Basisvorspannungsquelle 48, einer Konstantspannungsquelle, die von der Versorgungsspannung $U_{20}$ abgeleitet ist.

Der Eingang des Endverstärkers 52, dessen Spannungsverstärkung $V_E = 1$ ist, ist am Ausgang des ersten Differenzverstärkers, also am Kollektor des Transistors 41, und am Kollektor des Transistors 50 des zweiten Differenzverstärkers angeschlossen. Vom Ausgang 11 des Endverstärkers 52 ist eine Gegenkopplung über einen Spannungsteiler 53, 54 zur Basis des Transistors 50 des zweiten Differenzverstärkers geführt, die sich über den Kollektor des Transistors 50 am Eingang des Endverstärkers 52 auswirkt.

Die Versorgungsspannung $U_{20}$ für den ersten Differenzverstärker und den Endverstärker 52 kann der in FIG. 4 gezeigten Konstantspannungsquelle 20 entnommen werden.

Ferner ist an der Emitterverbindung der Transistoren 49 und 50 eine zum Anschluss B (FIG. 4) führende Steuerleitung vorgesehen.

Ein Steuerstrom in den Anschluss B (FIG. 5) vermindert die Emitterströme der Transistoren 49 und 50 und damit deren Steilheit, so dass mit steigendem Steuerstrom die Gegenkopplung geringer wird. Folglich ist in FIG. 4 der Spannungsteiler 241 so einzustellen, dass bei maximal möglichem Schleifenstrom (100 mA) der Transistor 251 gesperrt, der Steuerstrom durch den Anschluss B folglich Null und die Gegenkopplung im Sprechverstärker voll wirksam ist.

Bei minimal zulässigem Schleifenstrom (30 mA) erreicht der Steuerstrom seinen maximalen Wert und sollte den Strom der Konstantstromquelle 51 (FIG. 5) vollständig aufnehmen. Hierzu können der Konstantstrom $I_{51}$ oder der Widerstandswert des Arbeitswiderstandes 241 geeignet gewählt werden.

In FIG. 6 ist das Schaltbild eines Hörverstärkers mit Eingang 10, einem ersten und zweiten Differenzverstärker, einer Endstufe 86 und Hörer 101 dargestellt. Der erste Differenzverstärker umfasst die Transistoren 72 und 73, die Emitterstromquelle 74 und die Arbeitswiderstände 75 und 76. Der zweite Differenzverstärker umfasst die Transistoren 82 und 83 und die Emitterstromquelle 84.

Der Endverstärker 86 hat eine Spannungsverstärkung von 1 und liegt am Ausgang des ersten Differenzverstärkers, d.h., am Kollektor des Transistors 72. Von seinem Ausgang führt eine Gegenkopplung über einen Widerstand 87 zum Eingang des zweiten Differenzverstärkers, der Basis des Transistors 83, dessen Kollektor ebenfalls mit dem Eingang des Endverstärkers 86 verbunden ist.

Die Schaltung des Hörverstärkers entspricht im wesentlichen — mit Ausnahme des unsymmetrischen Eingangs des ersten Differenzverstärkers — der des in FIG. 5 gezeigten Sprechverstärkers. Die Versorgungsspannung $U_{20}$ für den ersten Differenzverstärker und den Endverstärker 86 kann wiederum der in FIG. 4 dargestellten Konstantspannungsquelle 20 entnommen werden.

Auch hier wird der Steuerstrom, diesmal vom Anschluss C (vergl. auch FIG. 4), dem Verbindungspunkt der Emitter der Transistoren des zweiten Differenzverstärkers zugeführt. Wirkungsweise und Einstellung der Verstärkungssteuerung entsprechen den zu FIG. 5 gegebenen Erläuterungen.

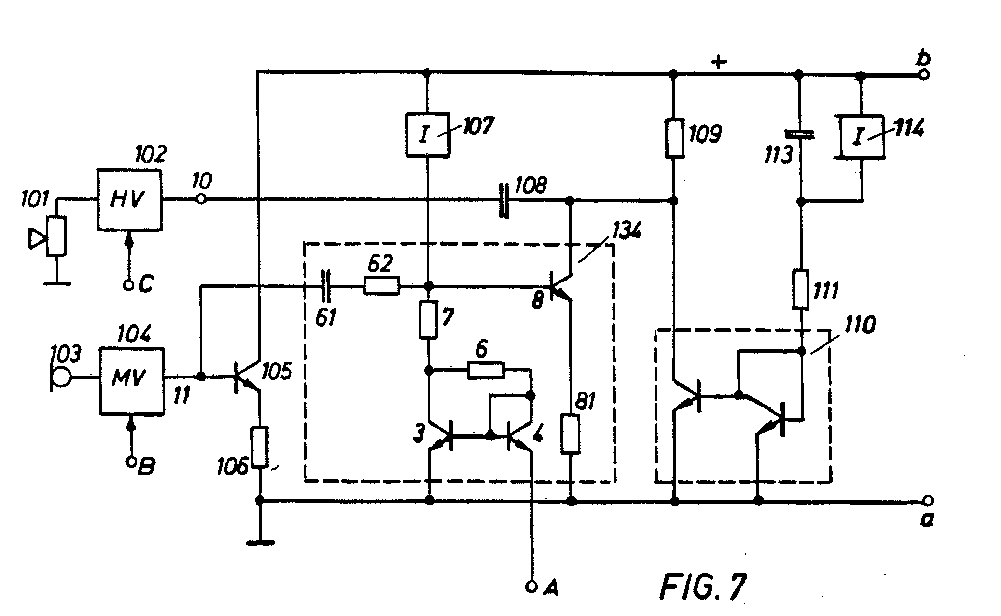

In FIG. 7 ist schliesslich die Schaltung für die Steuerung der Nachbildung entsprechend dem Schleifenstrom dargestellt. Die Schaltung ist aus der DE-OS 29 46 305, veröffentlicht am 21.5.81, bekannt. Die Signale des Mikrofons 103 werden vom Mikrofonverstärker 104, dessen Schaltung in FIG. 5 ausführlich dargestellt und bereits oben beschrieben ist, verstärkt und gelangen zum Transistor 105, der die verstärkten Mikrofonsignale in die Teilnehmeranschlussleitung (Anschlüsse a, b) einspeist. Sprachsignale, von der Teilnehmeranschlussleitung stammend, gelangen über den Kondensator 113 und den Widerstand 111 über den Stromspiegel 110 und den Kondensator 108 zum Hörverstärker 102 und zum Hörer 101. Die Schaltung des Hörverstärkers ist in FIG. 6 ausführlich dargestellt und dort bereits beschrieben.

Da die Sprachsignale des Mikrofons 103 über den Mikrofonverstärker 104 und dem Transistor 105 ebenfalls über Kondensator 113, Widerstand 111, Stromspiegel 110 und Kondensator 108 zum Hörverstärker 102 gelangen können, werden sie zur Vermeidung eines unerwünscht starken Mithörens durch eine Nachbildung 134, die Gegenstand der DE-OS 29 46 305 ist, kompensiert, in dem die Sprachsignale des Mikrofonverstärkers über Anschluss 11 und steuerbarer Impedanzschaltung 134 gegenphasig, nahezu mit gleicher Stromamplitude wie die vom Stromspiegel 110 kommenden, in dem Verbindungspunkt zwischen Kondensator 108 und Widerstand 109 addiert werden.

Der steuerbaren Impedanzschaltung 134 (Nachbildung) wird die Steuerspannung des Anschlusses A in FIG. 4 an dem in FIG. 7 mit gleicher Bezeichnung gekennzeichneten Anschluss zugeführt. Bei Schleifenströmen unter dem Minimalwert (30 mA) ist die Steuerspannung am Anschluss A Null, darüber positiv und nimmt bei linear ansteigendem Schleifenstrom ebenfalls linear zu. Höhere positive Spannungen an dem Anschluss A lassen im Transistor 3 des aus den Transistoren 3 und 4 und dem Widerstand 6 gebildeten Stromspiegels einen grösseren Kollektorstrom $I_3$ und einen abnehmenden Strom $I_6$ durch den Widerstand 6 fliessen, wodurch der Wechselstromwiderstand $r_1$ zwischen Kollektor und Emitter des Transistors 3 gemäss der Gleichung

$$r_1 = R_6/(1 + I_3/I_6)$$

abnimmt.

Die Schaltung 134 ist so ausgelegt, dass bei minimalem zulässigem Schleifenstrom (30 mA), bei dem der Strom durch den Widerstand 23 in FIG. 4 Null ist, die Impedanzschaltung 134 einen ersten Sollwert und beim maximalen Schleifenstrom (100 mA) einen zweiten festen Sollwert aufweist, der der Teilnehmeranschlussleitungslänge Null zugeordnet ist.

**Patentansprüche**

1. Schaltungsanordnung zur Erzeugung von Steuergrössen aus dem Schleifenstrom eines über eine Anschlussleitung gespeisten Endgerätes in Fernmeldeanlagen zur Steuerung mindestens der Verstärkung eines Hör- und/oder eines Sprechverstärkers, dadurch gekennzeichnet, dass oberhalb eines vorgegebenen Schwellenwertes eine der Schleifenstromänderung der Anschlussleitung proportionale Spannung dem Emitter mindestens eines in Basisschaltung betriebenen Transistors (251; 252) zugeführt ist und dass dessen exponentiell mit dem reziproken Wert des Schleifenstromes verlaufender Kollektorgleichstrom dem Verstärkungsregelungseingang (B, C) des bzw. der elektrischen Verstärker zugeführt ist (Fig. 4).

2. Schaltungsanordnung nach Anspruch 1, dadurch gekennzeichnet, dass die dem Schleifenstrom proportionale Spannung an einem im wesentlichen vom Schleifenstrom durchflossenen Widerstand (14) abgegriffen ist, dass zwischen Spannungsabgriff und Emitter des in Basisschaltung betriebenen Transistors (251; 252) ein Differenzverstärker (21) und ein zweiter Transistor (22) in Emitterschaltung geschaltet ist, dass als Schwellenwert die Offset-Spannung des Differenzverstärkers (21) vorgesehen ist und dass der Emitter des in Basisschaltung betriebenen Transistors (251; 252) an einem Spannungsteiler des Aussenwiderstandes des zweiten Transistors (22) angeschlossen ist.

3. Schaltungsanordnung nach Anspruch 2, dadurch gekennzeichnet, dass der zweite Eingang des Differenzverstärkers (21) am Kollektor des zweiten Transistors (22) angeschlossen ist und der Schwellenwert zusätzlich durch den Spannungsabfall des Emitterstromes des in Basisschaltung betriebenen Transistors (251 bzw. 252) bestimmt ist.

4. Schaltungsanordnung nach Anspruch 2 oder 3, dadurch gekennzeichnet, dass für jeden einem Verstärker zugeordneten Steuerstrom ein Spannungsteiler (241, 242) für jeweils einen in Basisschaltung betriebenen Transistor (251 bzw. 252) vorgesehen ist, wobei die Spannungsteiler (241, 242) parallel geschaltet sind und den Aussenwiderstand des zweiten Transistors (22) bilden.

5. Schaltungsanordnung nach einem der Ansprüche 2 bis 4, dadurch gekennzeichnet, dass am Emitter des zweiten Transistors (22) ein Emitterwiderstand (23) angeschlossen ist, an dem oberhalb des vorgesehenen Schwellenwertes eine der Schleifenstromänderung proportionale Spannung zur Steuerung einer Nachbildungsimpedanz (134) abgegriffen ist.

**Claims**

1. Circuit arrangement for the generation of control magnitudes from the loop current of a terminal device fed through a connecting line in telecommunication installations for the control of at least the amplification of a hearing amplifier and/or a speech amplifier, characterised thereby, that above a predetermined threshold value, a voltage proportional to the loop current change of the connecting line is conducted to the emitter of at least one transistor (251; 252) operated in common base configuration and that its unidirectional collector current, which extends exponentially with the reciprocal value of the loop current, is conducted to the amplification regulation input (B, C) of the electrical amplifier or amplifiers (Fig. 4).

2. Circuit arrangement according to claim 1, characterised thereby, that the voltage proportional to the loop current is tapped off at a resistor (14) flowed through substantially by the loop current, that a difference amplifier (21) and a second transistor (22) in common emitter configuration are connected between voltage tap and emitter of the transistor (251; 252) operated in common base configuration, that the offset voltage of the difference amplifier (21) is provided as threshold value and that the emitter of the transistor (251; 252) operated in common base configuration is connected to a voltage divider of the external resistance of the second transistor (22).

3. Circuit arrangement according to claim 2, characterised thereby, that the second input of the difference amplifier (21) is connected to the collector of the second transistor (22) and the threshold value is additionally determined by the voltage drop of the emitter current of the transistor (251; 252) operated in common base configuration.

4. Circuit arrangement according to claim 2 or 3, characterised thereby, that a respective voltage divider (241, 242) for each transistor (251; 252) operated in common base configuration is provided for each control current associated with an amplifier, wherein the voltage dividers (241, 242) are connected in parallel and form the external resistance of the second transistor (22).

5. Circuit arrangement according to one of the claims 2 to 4, characterised thereby, that an emitter resistor (23), at which a voltage proportional to the loop current change is tapped off above the predetermined threshold value for the control of a balancing impedance (134), is connected to the emitter of the second transistor (22).


## Revendications

1. Circuit délivrant des grandeurs de commande à partir du courant de boucle d'un équipement terminal alimenté par une ligne dans des installations de télécommunication, pour la commande du gain d'un amplificateur d'écoute et/ou d'un amplificateur de conversation au moins, ledit circuit étant caractérisé en ce qu'au-delà d'un seuil prédéterminé, une tension proportionnelle à la variation du courant de boucle de la ligne est appliquée à l'émetteur d'au moins un transistor en montage base commune (251; 252) dont le courant continu collecteur, variant exponentiellement avec l'inverse du courant de boucle, est appliqué à l'entrée de régulation du gain (B, C) du ou des amplificateurs électriques (figure 4).

2. Circuit selon la revendication 1, caractérisé en ce que la tension proportionnelle au courant de boucle est prélevée aux bornes d'une résistance (14) parcourue par le courant de boucle; un amplificateur différentiel (21) et un second transistor (22) en montage émetteur commun sont branchés entre le point de prélèvement de la tension et l'émetteur du transistor en montage base commune (251; 252); la tension de dérive de l'amplificateur différentiel (21) constitue la valeur du seuil; et l'émetteur du transistor en montage base commune (251; 252) est relié à un diviseur de tension de la résistance externe du second transistor (22).

3. Circuit selon la revendication 2, caractérisé en ce que la seconde entrée de l'amplificateur différentiel (21) est reliée au collecteur du second transistor (22) et le seuil est en outre déterminé par la chute de tension produite par le courant émetteur du transistor en montage base commune (251 ou 252).

4. Circuit selon une des revendications 2 ou 3, caractérisé en ce que pour chaque courant de commande affecté à un amplificateur, un diviseur de tension (241, 242) est prévu pour chaque transistor en montage base commune (251 ou 252), les diviseurs de tension (241, 242) étant branchés en parallèle et constituant la résistance externe du second transistor (22).

5. Circuit selon une quelconque des revendications 2 à 4, caractérisé en ce que l'émetteur du second transistor (22) est relié à une résistance (23) d'émetteur sur laquelle une tension proportionnelle à la variation du courant de boucle est prélevée, au-delà du seuil prévu, pour la commande d'une impédance d'équilibrage (134).

FIG.1

FIG. 2

FIG. 3

FIG. 4

0 063 748

FIG. 5

FIG.6

13

FIG. 7

0 063 748